# EUROPEAN PATENT SPECIFICATION

(11) **EP 1 669 751 B1**
(45) Date of publication and mention of the grant of the patent: **12.12.2007**
(21) Application number: 05106188.5
(22) Date of filing: 07.07.2005
(51) Int. Cl.: G01N 27/447

(54) **Modular system for gel electrophoresis device**
Modulares System für Gelelektrophoresegerät
Système modulaire pour dispositif d'électrophorèse sur gel

(43) Date of publication of application: 14.06.2006
(73) Proprietor: Agilent Technologies, Inc., Santa Clara, CA 95051 (US)
(72) Inventor: Zimmermann, Hans-Peter, 76227, Karlsruhe (DE)
(74) Representative: Barth, Daniel Mathias

(56) References cited:
- WO-A-03/019172
- WO-A-03/029523
- WO-A-03/058226
- WO-A-20/05029061

## Description

### BACKGROUND ART

The present invention relates to a gel electrophoresis device.

Electrophoresis is a method to analyze complex mixtures of substances, for instance biological substances like proteins. By electrophoresis, a mixture of different substances may be separated by taking into account the intrinsic charge characteristics of the substances, particularly different isoelectric points of different substances. For an electrophoresis analysis, an analyt may be inserted in a gel strip, and then an electric field is applied along the gel strip so that the electrically charged molecules are separated based on their different electric charges. Along an extension of a gel strip for electrophoresis, a gradient of the local pH value may be generated so that a component having a particular isolelectric point moves along the gel strip and is stopped at a characteristic position and thus pH value of the gel strip, in accordance with the isoelectric point of this component.

US 5,989,400, US 6,113,766 and US 6,599,410 B1 disclose devices for gel electrophoresis.

In conventional gel electrophoresis as described above, substances of an analyt are separated into different fractions which are spatially separated along the extension of the gel strip.

WO 01/86279 A1 and WO 03/019172 A2 disclose an alternative electrophoresis method, wherein a plurality of compartments containing a solution are arranged above a gel strip. After having separated the different fractions of the analyt by applying an electric field, a fraction of substances stopped at a particular position along the gel strip is accumulated in a solution contained in an adjacent one of the plurality of compartments. In comparison to the above-mentioned conventional electrophoresis which may also be denoted as "in-gel electrophoresis" in this specification, the approach of WO 01/86279 A1 and WO 03/019172 A2 may also be denoted as "off-gel electrophoresis" in this specification, since the separated components may be provided off the gel. [0005a] Extraction of molecules using a frame is known from WO 2005/029061 A1. WO 03/058226 A1 relates to isoelectric focussing and forms the preamble to claim 1.

### DISCLOSURE

It is an object of the invention to enable improved gel electrophoresis. The object is solved by the independent claims. Exemplary embodiments are shown by the dependent claims.

According to an exemplary embodiment of the present invention, an insert element for a gel electrophoresis device is provided, the insert element comprising a carrier element comprising one or more gel strip receptions, wherein each of the one or more gel strip receptions is adapted to receive a gel strip, and wherein each of the one or more gel strip receptions is adapted to receive a compartment frame to be located close to the gel strip.

According to another exemplary embodiment of the present invention, a gel electrophoresis device is provided comprising one or more insert element receptions, wherein each of the one or more insert element receptions is adapted to receive an insert element having the above-mentioned features.

According to still another exemplary embodiment of the present invention, a method of operating a gel electrophoresis device is provided, the method comprising the step of receiving an insert element having the above-mentioned features in at least one of one or more insert element receptions of a gel electrophoresis device.

According to an exemplary embodiment of the invention, a modular system for a gel electrophoresis analysis may be provided, wherein a gel strip receiving carrier element may selectively be configured to receive or to be free of one or more compartment frames above received gel strips. Consequently, an insert element for a gel electrophoresis device may be customized by a user to fit user-specific preferences related to a particular electrophoresis application.

For instance, a plurality of gel strips may be received by the carrier element which allows to carry out a plurality of gel electrophoresis experiments simultaneously. If desired, one or more of the received gel strips may be adapted for an "off-gel electrophoresis" experiment by means of arranging a compartment frame in vicinity of, for instance above, an assigned gel strip. However, for carrying out an "in-gel electrophoresis" experiment, a gel strip received in a gel strip reception may remain free, for instance uncovered, from a respective compartment frame. Consequently, in a gel electrophoresis device receiving such an insert element in an insert element reception, it is possible to carry out "in-gel" and "off-gel" experiments simultaneously, to load a part of or all gel strip receptions and to thus properly adjust the configuration of the gel electrophoresis system to the user-defined specifications.

Thus, a modular "in-gel" electrophoresis/"off-gel" electrophoresis tray (which may also be denoted as insert element) can be provided according to an exemplary embodiment of the invention allowing for a high degree of flexibility.

For an electrophoresis analysis using the electrophoresis system according to an exemplary embodiment of the invention, a gel strip may first be hydrated, wherein a pH gradient may be present along an extension of the gel strip as a basis for isoelectric focussing of an analyt to be investigated. One or more of such gel strips may be inserted in corresponding receptions of the insert element. Along the extension of the inserted gel strips, an electric field may be applied to the gel strips individually or concurrently by means of contacting electrode members of the gel electrophoresis device which are brought to a defined electric potential. Such electrode members may be directly electrically coupled to the gel strips or may be dipped in electrolyte containing cavities of compartment frames which may or may not be provided to be brought in functional contact with the gel strips. As a result of the generated electric field, an electric force takes effect on charged components of an analyt in the gel strip. Thus, components of the analyt like proteins are moved along the gel strip. Furthermore, the components to be separated are stopped to remain at respective positions of the gel strip, such positions being defined by the charge properties of the component in combination with the spatially dependent pH gradient of the gel strip.

For an "in-gel" operation mode of the gel electrophoresis device, different fractions of components of the analyt being accumulated at different positions within the gel strip are recovered from the gel strip for instance by cutting a corresponding portion of the gel strip and by dissolving the component located at a particular position in a liquid solution. No compartment frames are necessary for an "in-gel" analysis.

For an "off-gel" operation mode of the gel electrophoresis device, the carrier element having received gel strips therein, may be provided with compartment frames which may be filled with a liquid. Such compartment frames may be mounted above, below or laterally of the gel strip, however in functional (fluid) connection therewith. The electrodes members may be contacted directly with the gel strip or with electrical contacts provided at (end) portions of the gel strips. Alternatively, the electrode members may contact the compartment frames, particularly electrically conductive liquid contained in cavities of the compartment frames adjacent to (end) portions of the gel strips so as to generate an electric field along an extension of the gel strips. Thus, the gel electrophoresis device may be operated for performing "off-gel" analysis, wherein the general concept of "off-gel" electrophoresis is specified in WO 01/86279 A1 and WO 03/019172 A2.

With the modular system according to an embodiment of the invention, any desired number of insert elements may be inserted in an electrophoresis device, wherein each insert element may comprise one or a plurality of receptions for a gel strip, one or more received gel strips, and optionally one or more compartment frames removably attachable to one or more of the respective gel strip receptions.

Thus, it is possible, in accordance with a particular application intended by a user, to flexibly combine conventional "in-gel" analysis with "off-gel" analysis.

In the frame of an "in-gel" experiment, the analyt is introduced in the gel, an electric field is applied to the gel strip, and the particular fraction of a material moves to a particular position inside the gel strip. In contrast to this, in the case of an "off-gel" experiment, analyt may be introduced in one of the compartment frames, an electric field may be applied to the gel strip or to electrodes in the compartment frames, and then the material to be separated moves, for instance by means of diffusion or the like, from the compartments into the gel strip. Within this gel strip, a conventional gel electrophoresis separation occurs. Then, the different fractions stopped inside of the gel strip may move, for instance by means of diffusion or the like, from the gel strip to an adjacent, for instance above-positioned compartment, so that the separated components are provided in a liquid solution. Thus, in each of the cavities of the compartment frame, a particular fraction of the separated materials can easily be recovered, for instance by means of a pipette. Thus, an "off-gel" experiment may allow to process relatively large amounts of sample, and it is convenient for a user to recover the separated components provided in a liquid solution by means of a pipette.

The gel strips which may be received in the gel strip receptions of the carrier element may have contacts, and the electrode members may be connected to these contacts. Alternatively, the electrodes may be directly dipp ed in an analyte (for instance an electrolyte) contained in one of the compartment frames.

The length of the gel strips may be, for instance, between 7 cm and 24 cm. A current applied to a gel strip may be, for instance, in the range between 1 µA and 1 mA. In combination with a voltage of, for instance, 10 kV applied between ends of the gel strip, a power of some Watt may be dissipated in the gel strip.

When the carrier element is inserted or mounted in the gel electrophoresis device, it may be possible to cool the gel strip provided above in order to prevent an undesired heating of the gel strip and the analyte contained therein, preventing that damageable analyt material like proteins is destroyed due to overheating. It may be possible to heat the gel strip to bring the analyt to a desired temperature.

According to an embodiment of the invention, it is possible to simply mechanically click the different components of the gel electrophoresis device together. Thus, a reconfigurable and removably mountable building set or construction kit is provided allowing to configure the gel electrophoresis device in accordance with user-defined specifications.

Thus, according to one aspect of the invention, a multi-function device may be provided which combines opportunities for "in-gel" electrophoresis with opportunities for "off-gel" electrophoresis in a single device.

The carrier element may be a plastics member, which may be adapted as a one-way device or which may be adapted for re-use. For instance, the carrier element may be manufactured by injection molding. A plurality of carrier elements or trays may be mounted independently from one another in the gel electrophoresis device.

The gel strip receptions may be spatially defined by a rib structure allowing to insert the gel strips between adjacent ribs with low effort. Boundary walls at end portions of the carrier element may assist in the spatial definition of the gel strip receptions and may be designed as spring-like elements to further simplify the click-in system according to an embodiment of the invention. Furthermore, after having inserted gel strips in the gel strip reception and after having optionally arranged one or more compartment frames above the gel strips, the electrodes may be clicked on the arrangement obtained, which may allow to fasten the entire components in an easy, removable and user-defined manner.

After having fixed electrodes above the tray, one of the two electrodes may be designed slidably or glidably so that, by moving or shifting the electrode(s) along the extension of the gel strips, it is possible to adjust the electrode(s) position(s) to a length of a used gel strip. The opportunity to provide one of the two electrodes in a shiftable and the other one in a fixed manner further increases the flexibility of the system and the modularity of the gel electrophoresis apparatus.

A bottom wall of the carrier element, on which a gel strip may be positioned, may be made of a thin-walled plastics material, which may optionally be comprised of or filled with mineral fibers or other thermally conductive material, so as to ensure a proper thermal contact between the gel strip and a cooling/heating element located below the insert element. This may be advantageous, since the electric current applied to the gel strip may heat a heat-sensitive analyte inserted in the gel strip which may thus be cooled in order to avoid damage of the sensitive material, like protein. For instance, such a cooling function may be performed by means of a Peltier cooling device. Alternatively, for instance in order to increase chemical reaction rates and therefore to accelerate the electrophoresis analysis, it may be desired to heat the gel strip by means of a heating element like a heating coil positioned below the gel strip receptions of the insert element. In order to improve the thermal conductivity between the gel strip and the heating and/or cooling element, a thermally conductive insert may be provided in the base or bottom part of the carrier element. Ceramics (or other electrically insulating and thermally properly conducting material, like suitable plastics materials) might be an appropriate material for this purpose.

For the electric connection of the gel strips, one of the two electrodes may be designed as a common electrode concurrently contacting the first end portions of all gel strips simultaneously and supplying a common electric potential to all first end portions of all gel strips (for instance providing a ground potential). In contrast to this, the other electrode may be designed so as to contact each of the gel strips individually to apply an individual electrical potential (for instance a high voltage) to each of second end portions of all gel strips individually.

The insert element may be a tray with parallel aligned grooves which may, for instance, have the shape of a V-groove. Adjacent grooves may be separated by a ribs which may simplify the reception of compartment frames and which may assist in properly locating gel strips and compartment frames with respect to each other. In other words, the compartment frames may engage the tray via ribs, for instance to form a press-fit or snap-fit connection.

In the following, further exemplary embodiments of the insert element will be described. However, these embodiments also apply for the gel electrophoresis device and for the method of operating a gel electrophoresis device.

Each of the one or more gel strip receptions may be adapted to removably receive a gel strip. In other words, the gel strips do not have to be provided fixed or in advance at a manufacturer site, but may be inserted individually and flexibly by a user so as to allow to adjust the operation conditions to an experiment which the user wishes to carry out. Furthermore, after having finished an experiment, analyt contaminated gel strips may be removed and may be substituted by other gel strips for a new experiment.

Furthermore, each of the one or more gel strip receptions may be adapted to removably receive a compartment frame to be located close to the gel strips. In other words, also the configuration of the device for "off-gel" analysis and for "in-gel" analysis may be selectively adjusted for each experiment, so that a user may decide how many of the gel strip receptions should be adapted for an "off-gel" analysis and how many should be adapted for an "in-gel" analysis.

Each of the one or more gel strip receptions may be adapted to receive a compartment frame to be located above the gel strip. However, as an alternative to the arrangement of the compartment frame above a gel strip, the compartment frame may be arranged beneath the gel strip or at a lateral position with respect to the gel strip.

The compartment frame of the insert element may be adapted for providing an analyt filled compartment fluid coupled to the gel strip. In other words, an analyte, a buffer or any other solution may be filled in cavities of the compartment frame to form a liquid-gel boundary between the compartment frame and the gel strip. This may promote the fluid communication between gel and fluid.

At least one of the gel strip receptions may be one of the group consisting of a groove, an essentially V-shaped groove, an essentially U-shaped groove, a recess, a cavity, and an indentation. Thus, a geometrical configuration is provided which is intuitive for a user to provide the user with a hint as to where to introduce the gel strip, namely in the corresponding indentation.

Furthermore, one or more ribs may be provided between adjacent gel strip receptions to fasten the compartment frames. Thus, the mechanical barriers between adjacent receptions may not only be used to define a space for receiving the gel strips, but may also be used for defining a portion into which a compartment frame may be inserted to be brought in proper contact with the gel strip.

For instance, the ribs may be adapted to fasten the compartment frames by press-fit or snap-fit. In order to promote a proper fastening of the compartment frames between the ribs, the friction of the surface of the ribs may be enhanced, for instance by means of rubber material or the like.

Furthermore, the insert element may comprise an essentially vertical border wall at one or both end portions of one or more of the one or more gel strip receptions. Such a vertical border wall may provide a further boundary defining a range into which the modular components of the gel electrophoresis device may be inserted.

The insert element may be made of a plastics material, and may particularly be manufactured as an injection molded element so as to be manufacturable with low cost.

The insert element may have a thin-walled bottom so that a proper thermal contact between the gel strip and a heating or cooling device which may be optionally provided below the insert element is achievable.

Particularly, the insert element may have a bottom which may have embedded or which may be made of a metallic material and/or of mineral fibers and/or of a ceramics material.

In the following, further exemplary embodiments of the gel electrophoresis device will be described. However, these embodiments also apply for the insert element and for the method of operating a gel electrophoresis device.

The gel electrophoresis device may be adapted for fluid separation by means of an applied electric field. Such an electric field may be applied to the apparatus by means of electrically contacted portions, particularly end portions, of the gel strip which may be electrically conducting.

The gel electrophoresis device may comprise a first electrode member adapted to be attachable to an insert element received in one of the one or more insert element receptions to contact a gel strip received in a gel strip reception. Furthermore, the gel electrophoresis device may comprise a second electrode member adapted to be attachable to the insert element received in the one of the one or more insert element receptions to contact the gel strip received in the gel strip reception. By simply mounting the electrode members onto the insert element loaded with gel strips and, optionally, compartment frames, the configuration may be fastened and, simultaneously, an electric contact for generating the electric field may be provided.

The first electrode member and/or the second electrode member may be removably attachable to the insert element. In the modular concept of the gel electrophoresis device according to an embodiment of the invention, also the electrode members may be provided removably so that the entire device can be mounted in accordance with preferences of a user.

The first electrode member and/or the second electrode member may be removably attachable to the insert element by means of a magnetic attachment element. Thus, simultaneously with electrically contacting the gel strips by means of the electrode members, the electrode members may provide a locking between the gel electrophoresis device and the components attached thereto. For this purpose, magnetic fastening elements may be attached at the electrode members and at a base portion of the gel electrophoresis device.

The first electrode member and/or the second electrode member may be shiftable along the one or more gel strip receptions so that a position of the first electrode member and/or of the second electrode member with respect to the gel strip receptions may be selectively adjustable. It may be desirable to use gel strip receptions with a length which differs from the maximum length between end portions of the gel strip receptions. In such a scenario, in order to properly apply an electric field by means of contacting the gel strips, at least one of the electrode members may be shifted to fit to a particular length of a used gel strip. For this purpose, the electrode member attached to the gel electrophoresis device may simply be slid or glided along rails so as to contact a particular portion of the gel strip.

The first electrode member and/or the second electrode member may be adapted to concurrently electrically contact each of the gel strips in common. By taking this measure, a simple configuration is obtained in which a single electrical contact provides a particular electrical potential (for instance a ground potential) to an end portion of all gel strips received within an insert element.

Furthermore, the first electrode member and/or the second electrode member may be adapted to electrically contact the gel strips individually. In contrast to the embodiment described above, an assigned electrical potential can be applied to each of the gel strips independently from electrical potentials applied to other gel strips, so that differences in length, electrical conductivity, analyt to be analyzed or other properties of the different gel strips can be taken into account individually for each of the gel strips.

The gel electrophoresis device may further be adapted to selectively perform a separation of an analyte within the gel strips and/or to perform a separation of an analyte so that the separation products are provided in a solution contained in the compartment frames. In other words, it can be determined by a user whether an "in-gel" analysis or an "off-gel" analysis shall be carried out.

In the following, exemplary embodiments of the method of operating a gel electrophoresis device will be explained. However, these embodiments also apply for the insert element and for the gel electrophoresis device.

According to the method, a gel strip may be inserted in at least one of the one or more gel strip receptions. Beyond this, an analyte may be separated within the gel strips inserted in the at least of the one or more gel strip receptions. According to this "in-gel" electrophoresis analysis, the different fractions of the analyte separated remain at different portions of the gel strip.

Further, the method may comprise the step of inserting a compartment frame above the gel strip in at least of the one or more gel strip receptions in which the gel, strip has been inserted. This may allow to carry out an "off-gel" analysis, in which the products of the separation are provided in different compartments arranged above the gel strip.

Furthermore, the method may comprise the step of performing a separation of an analyte so that the separation products are provided in a solution contained in the compartment frames. Also this method step may relate to an "off-gel" analysis.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig. 1 is a three-dimensional view of a gel electrophoresis device according to an exemplary embodiment of the invention in a partially disassembled state.

Fig. 2 is a three-dimensional view of the gel electrophoresis device of Fig. 1 with an insert element according to an exemplary embodiment of the invention partially mounted to the gel electrophoresis device.

Fig. 3 is a three-dimensional view of the gel electrophoresis device of Fig. 1 with the insert element of Fig. 2 mounted thereon.

Fig. 4 is a three-dimensional view of the insert element of Fig. 2 in a disassembled state.

Fig. 5 is a three-dimensional view of the insert element of Fig. 4 with gel strips mounted therein.

Fig. 6 is a three-dimensional view of the insert element of Fig. 4 with compartment frames mounted on some of the gel strips.

Fig. 7 is a three-dimensional plan view of the insert element of Fig. 4 with compartment frames mounted in all of the gel strips and with electrode members according to an exemplary embodiment of the invention mounted on the insert element.

Fig. 8 is a three-dimensional view of the insert element of Fig. 4 without compartment frames and with one of the electrode members shifted along the insert element.

Fig. 9 is a three-dimensional view of the insert element of Fig. 4, wherein some components of the electrode members are removed.

Fig. 10 is a detailed view of a portion of the insert element of Fig. 9 and of one of the electrode members of Fig. 9.

Fig. 11 is a detailed view of a portion of the insert element of Fig. 4.

Fig. 12 is a detailed view of a bottom of the insert element of Fig. 4 and of one of the electrode members of Fig. 9.

Fig. 13 is a three-dimensional view of a compartment frame having a plurality of cavities according to an exemplary embodiment of the invention.

Fig. 14 is a three-dimensional view of an electrode member according to an exemplary embodiment of the invention.

Fig. 15 is a three-dimensional view of an electrode member and of a locking element attached thereto according to an exemplary embodiment of the invention.

Fig. 16 is a three-dimensional view of a locking element and of a counterpart according to an exemplary embodiment of the invention.

Fig. 17 is a three-dimensional view of the electrode member of Fig. 12.

The illustration in the drawing is schematically.

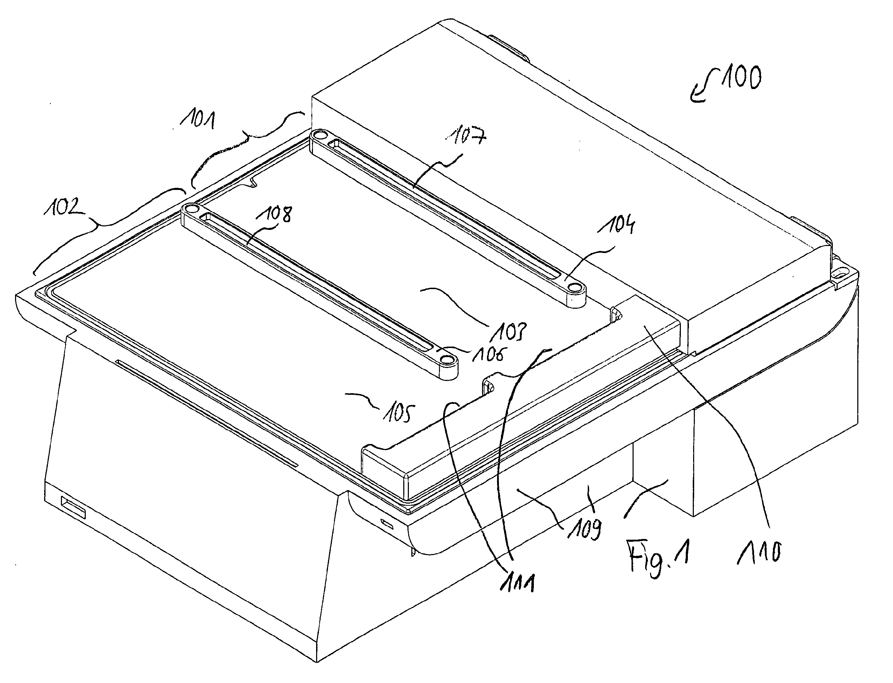

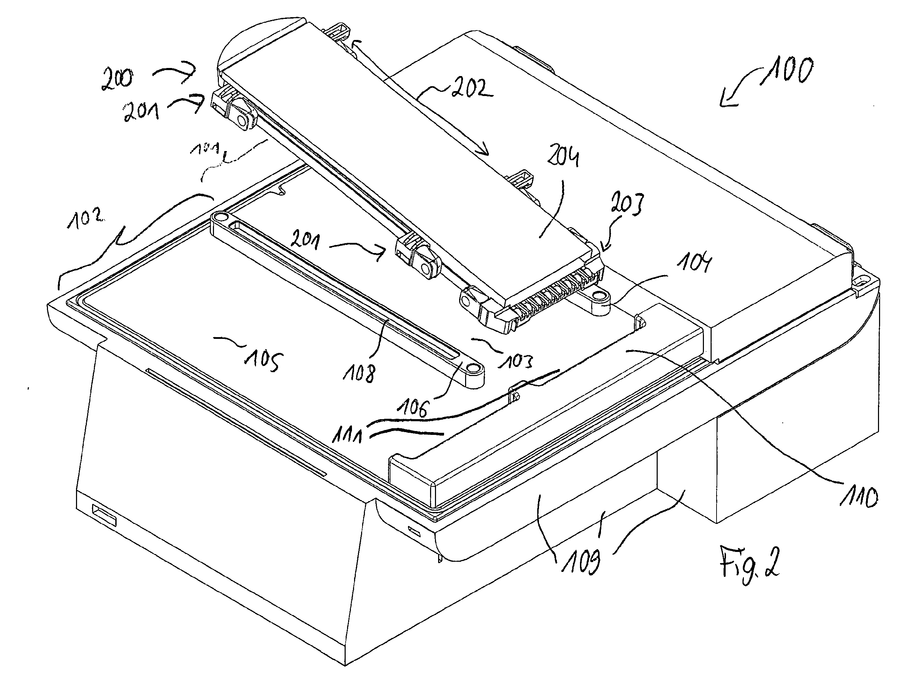

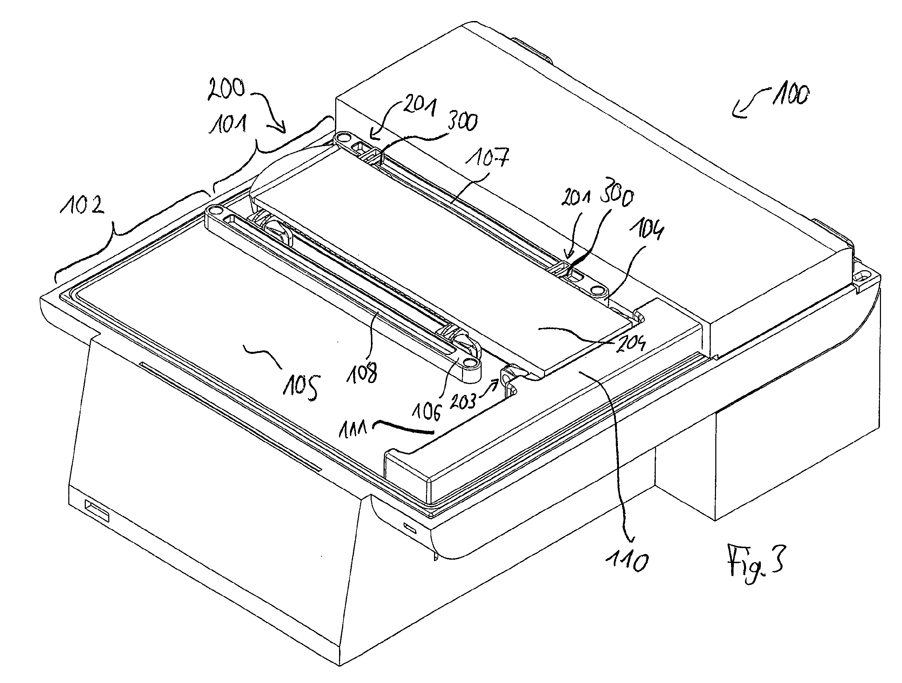

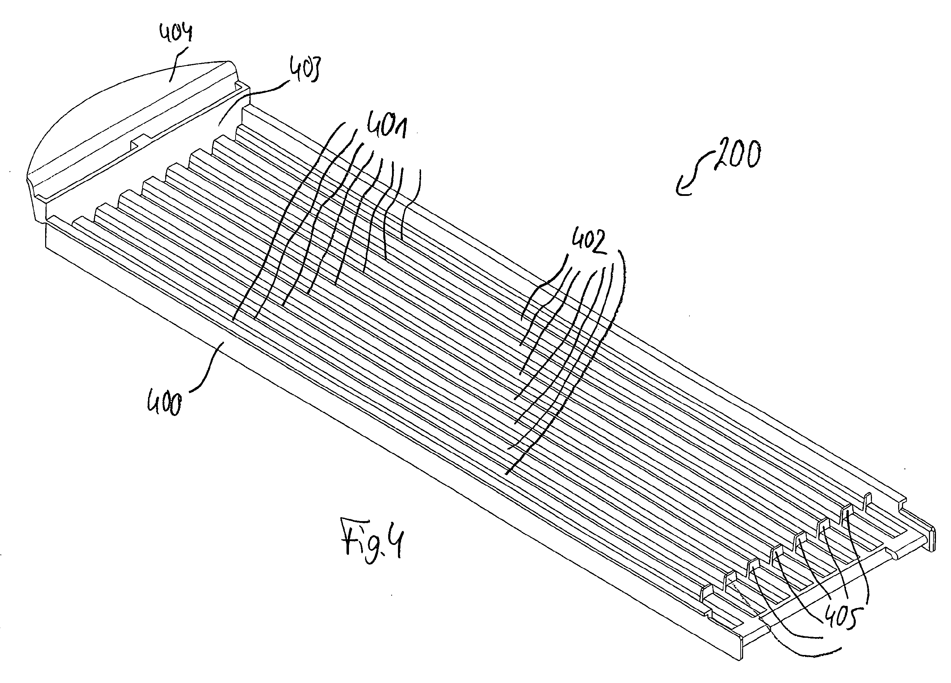

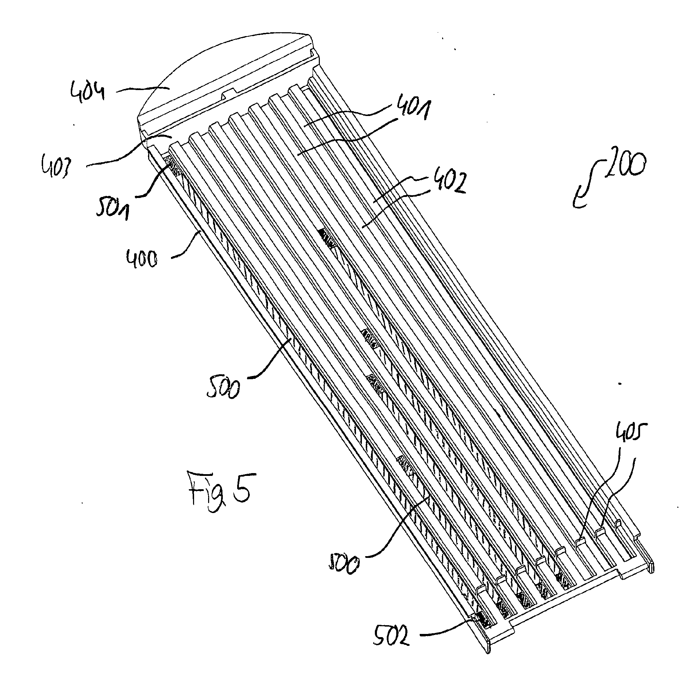

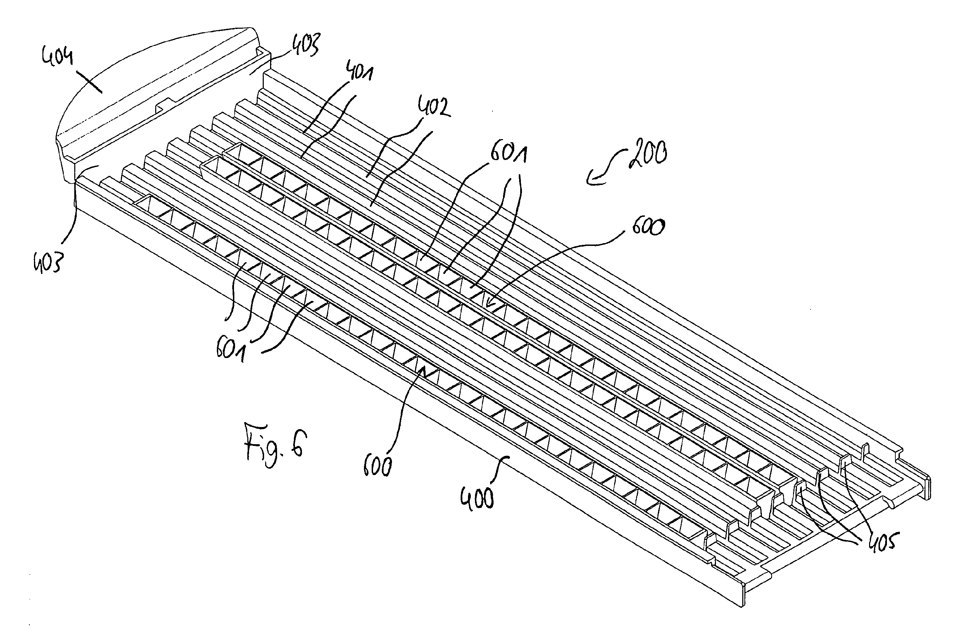

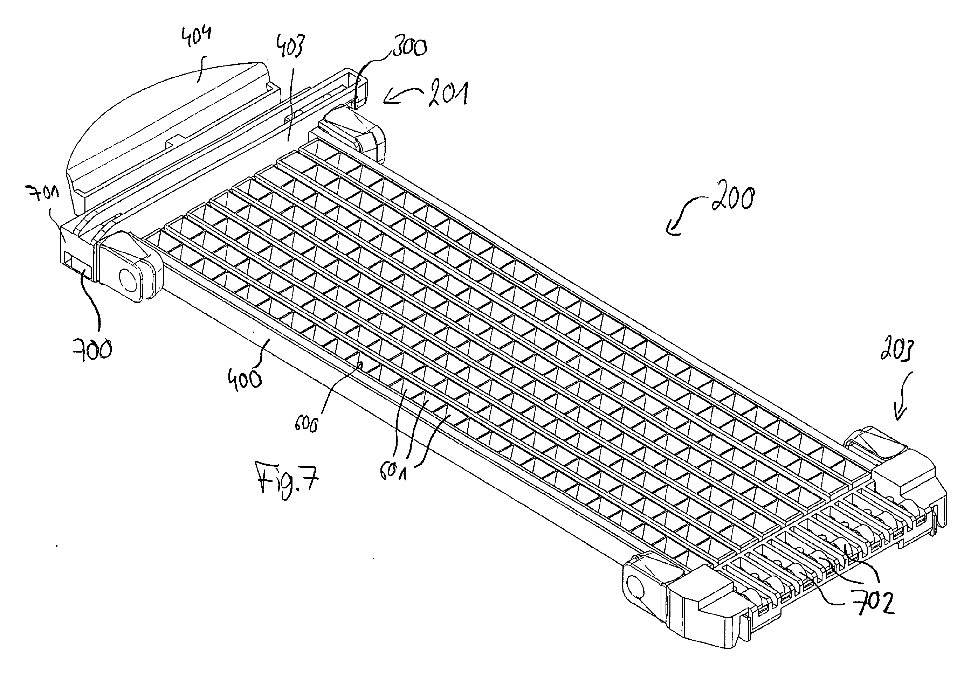

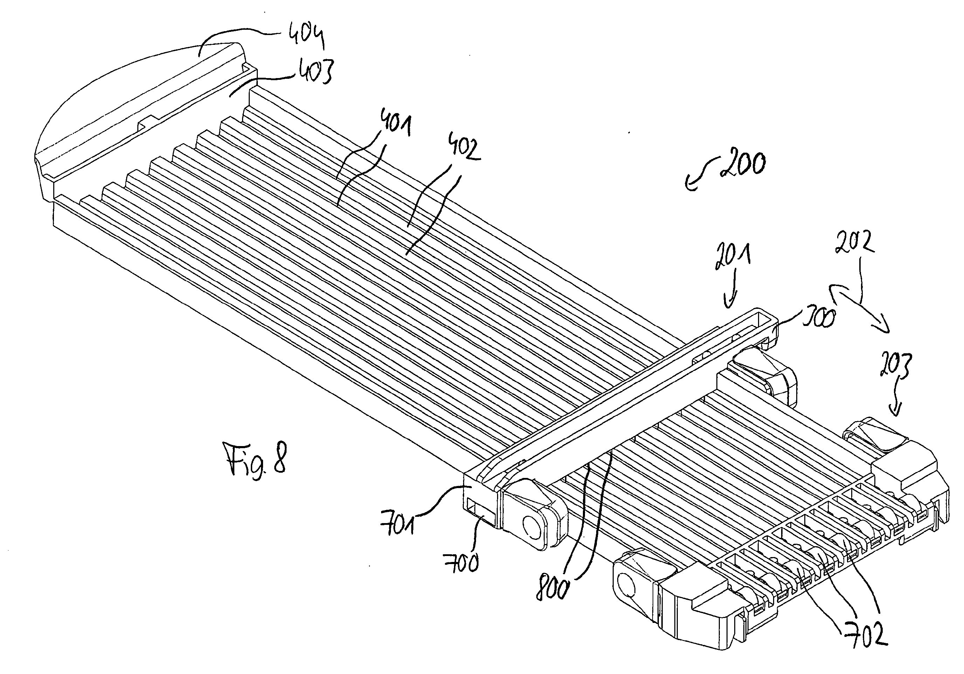

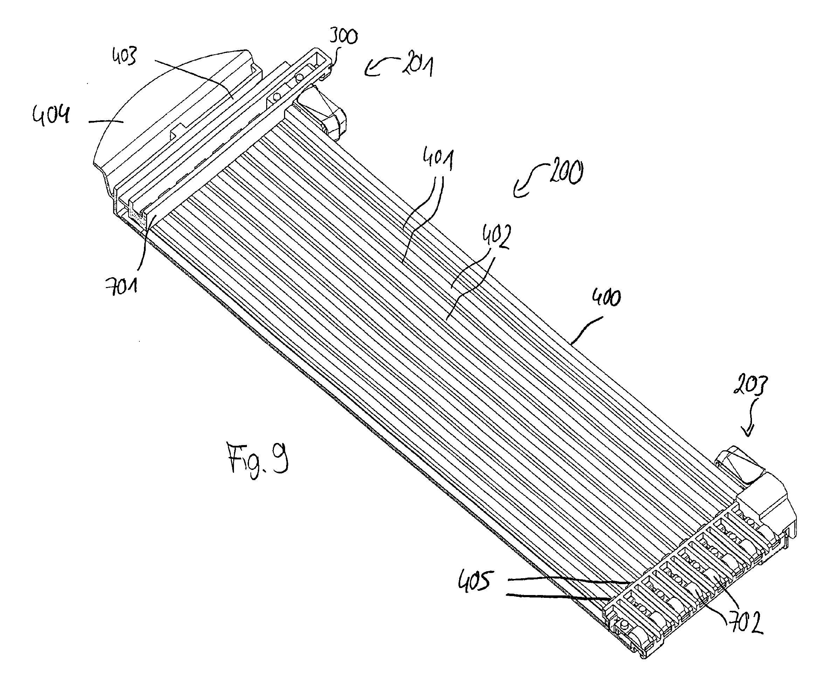

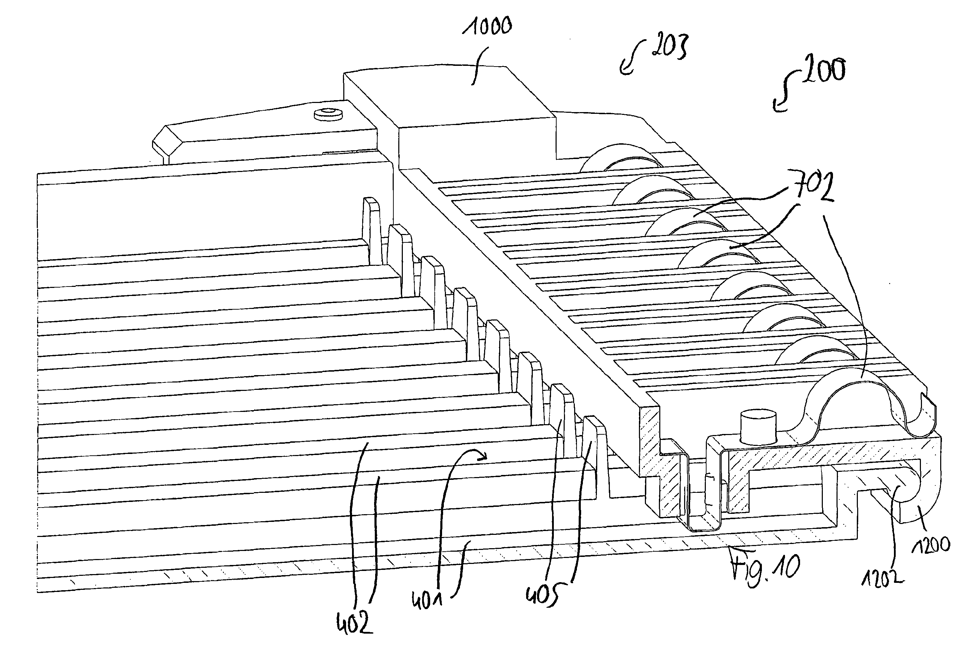

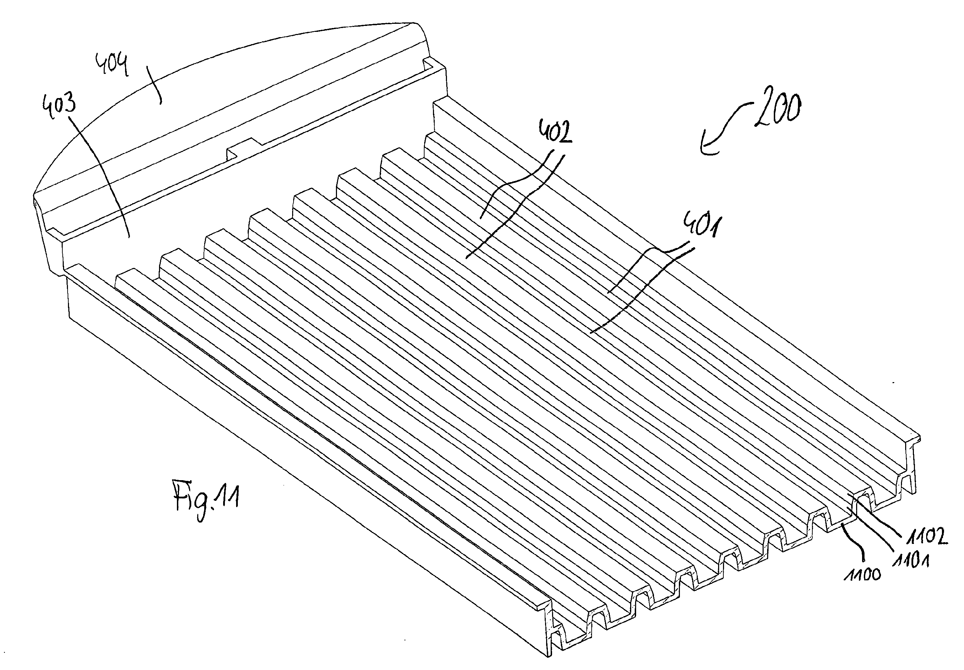

In the following, referring to **Fig. 1**, a gel electrophoresis device 100 according to an exemplary embodiment of the invention will be described.

In Fig .1, the gel electrophoresis device 100 is illustrated without a cover plate or cap which may be put on the top of the gel electrophoresis device 100 to cover the elements 101 to 108, 110, 111. Such a cover may be opened for mounting components of the modular gel electrophoresis device 100 in order to prepare a gel electrophoresis analysis in a user-defined manner. During the actual gel electrophoresis analysis, the cover may be closed in order to avoid undesired influences of the external environment on the gel electrophoresis analysis and to optionally improve a locking or fastening of the modular components received in the interior of the gel electrophoresis device 100.

Particularly, such a cover can be positioned on the top of the device 100 in order to cover a first insert element reception 101 and a second insert element reception 102. The first insert element reception 101 which is adapted to receive an insert element or a tray for performing a user-defined gel electrophoresis analysis comprises a planar platform 103 and a bar-like rail 104. In a similar manner, the second insert element reception 102 comprises a planar platform 105 and a bar-like rail 106.

The platforms 103 and 105 are, independently from each other, temperature-controllable, that is to say heatable or coolable, in order to selectively heat or cool a sample to a selectable temperature. A heating element (not shown) integrated within the platforms 103, 105 may comprise a heating coil or a heating spiral which may be controlled either by the gel electrophoresis device 100 automatically, or in a user-defined manner via a user interface, for instance a graphical user interface. A cooling element (not shown) integrated within the platforms 103, 105 may comprise a Peltier cooling device or a water cooling which may be controlled either by the gel electrophoresis device 100 automatically, or in a user-defined manner via the user interface.

For performing an electrophoresis experiment it might be appropriate to apply electrical signals (for instance an electrical potential) to electrodes which may be removably attached to the gel electrophoresis device 100, as will be described in detail below. For this purpose, a first electrode member may be connected to a strip-like first electrical contact 107 or 108 which is provided at each of the rails 104, 106. Essentially parallel to the strip-like first electrical contact 107, 108, at a bottom side of each of the rails 104, 106, a ferromagnetic strip (not shown in Fig. 1, see Fig. 16) is arranged which may allow to lock the electrode members to the gel electrophoresis device 100, for instance in order to fasten gel strips used for a gel electrophoresis experiment to the gel electrophoresis device 100.

Furthermore, the gel electrophoresis device 100 comprises a casing 109, wherein a plurality of further functional components (for instance electric circuits, etc.) of the gel electrophoresis device 100 which are not shown in Fig. 1 are housed in the interior of the casing 109. Fig. 1 shows a disassembled operation state of the gel electrophoresis device 100 without any insert element mounted on the insert element receptions 101, 102.

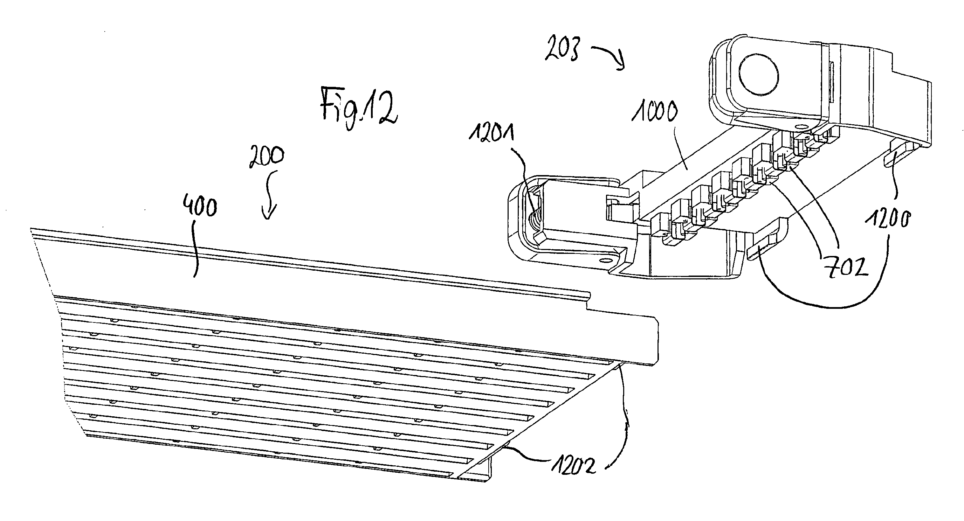

**Fig. 2** shows the gel electrophoresis device 100 in an operation state in which an insert element 200, which may also be denoted as a tray, is inserted in the first insert element reception 101. The insert element receptions 101, 102 are spatially defined by the platforms 103, 105, by the positions and the design of the rails 104, 106, and also by a boundary member 110 which has specially-shaped recesses 111 geometrically adapted to the shape of an end portion of the insert element 200.

As can be seen in Fig. 2, the insert element 200 comprises a first electrode member 201 which is shown twice in Fig. 2 to illustrate that the first electrode member 201 is provided slidably along a sliding direction 202. Furthermore, the insert element 200 comprises a second electrode member 203 which is provided in a fixed manner, that is to say in a manner as to be not slidably. However, in an alternative embodiment, also the second electrode member 203 may be provided slidably along the sliding direction 202. The construction and the function of the electrode members 201, 203 will be described in more detail below.

Furthermore, the insert element 200 comprises a cover plate 204 which can be mounted on the top of the modularly designed insert element 200 after having inserted a plurality of elements in the interior of the insert element 200. Such a cover 204 may have the function of fastening and protecting the elements located in the interior of the insert element 200.

As can be seen in Fig. 2, the already preconfigured and premounted insert element 200 can be inserted as a whole in one of the insert element receptions 101, 102. Alternatively, only a carrier element of the insert element 200 may be inserted in a desired one of the insert element receptions 101, 102, and the experimental components can then be mounted in such a carrier element in an operation state of the carrier element in which it is received in one of the insert element receptions 101, 102. Although two insert element receptions 101, 102 are shown in Fig. 2, it is possible to use more or less insert elements 200 and insert element reception 101, 102 , and to insert one or at least three insert elements 200 in the insert element receptions 101, 102.

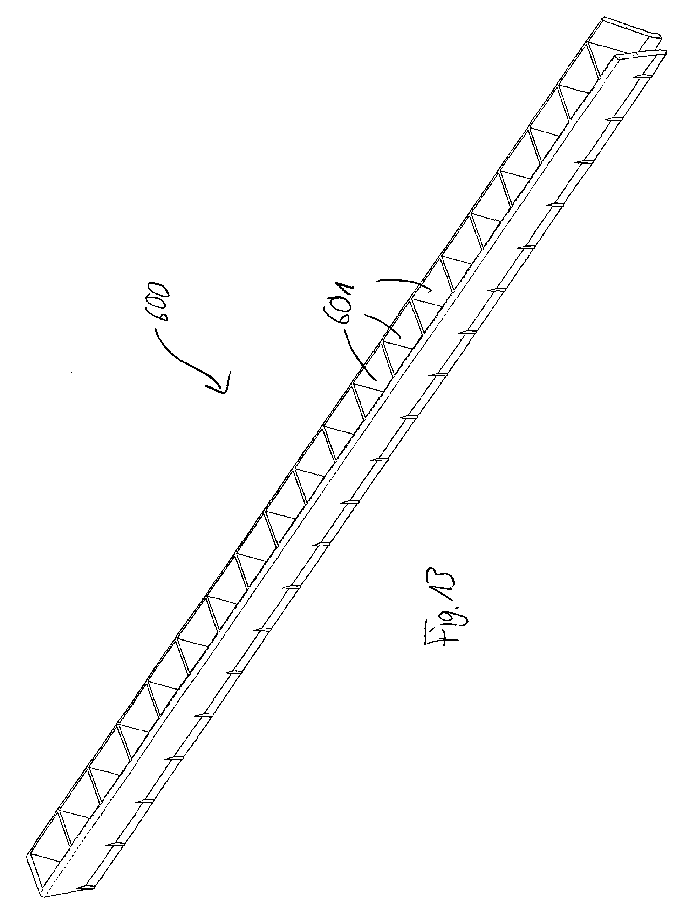

**Fig. 3** shows the gel electrophoresis device 100 in a further operation state in which the insert element 200 is readily and completely inserted in the insert element reception 101.

In this operation state, the first electrode member 201 which is, also in Fig. 3, shown twice, has a contact element 300 which is mechanically and electrically coupled to the strip-like first electrical contact of the rail 104. As will be described in more detail below, apart from this electrical contact between the components 300, 107, a magnetic locking mechanism is provided by the interaction between a permanent magnet provided at a lateral position of the first electrode 201 in vicinity of the contact element 300 and a strip made of a magnetic material which is provided at a bottom side of the rail 104 and extending parallel to the electrical contact 107 of the rail 104.

In the following, referring to **Fig. 4**, the insert element 200 shown in Fig. 2 is shown in a disassembled state without cover 204 and will be described in detail in the following.

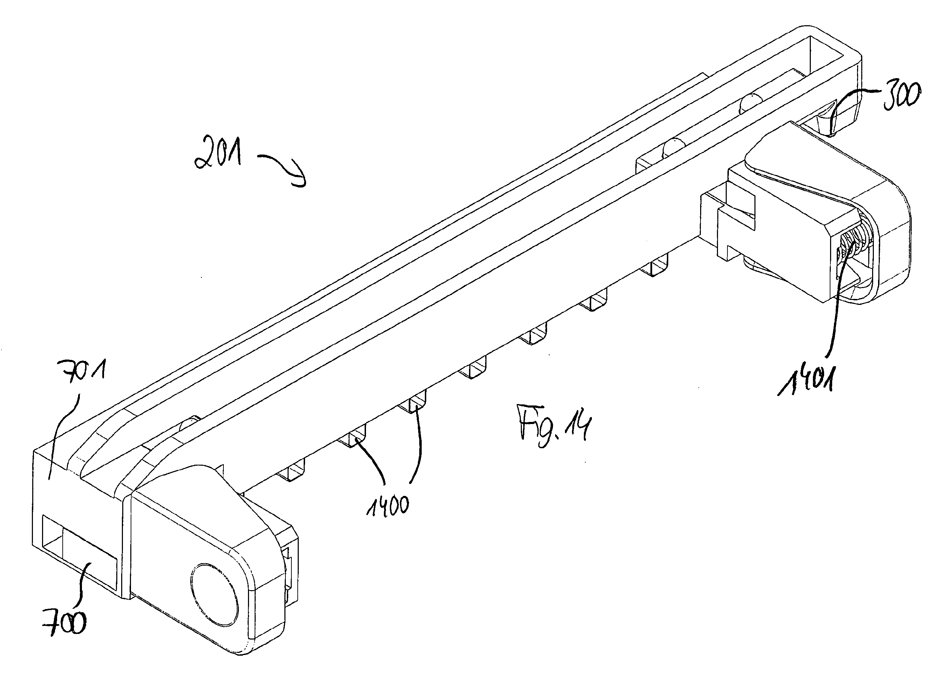

The insert element 200 for the gel electrophoresis device 100 comprises a carrier element 400 comprising a plurality of channel-like gel strip receptions 401. Each of the gel strip receptions 401 is adapted to receive a strip-like gel strip therein. Furthermore, each of the gel strip receptions 401 is further adapted to receive a compartment frame (see Fig. 6) in such a manner that the corresponding compartment frame is located closely, in the embodiment of Fig. 4 above, the corresponding gel strip. Any of the gel strip receptions 401 is adapted to removably and substitutably receive a corresponding gel strip, so that a gel strip may be inserted in each of the gel strip receptions 401 in accordance with requirements of a particular experiment or analysis. It is possible to remove a gel strip after use and replace it by a new gel strip for a subsequent experiment or analysis. Beyond this, each of the gel strip receptions 401 may removably receive a compartment frame to be located above the gel strip.

Each of the gel strip receptions 401 is designed as an essentially rectangular groove for receiving an oblong band-like or bar-like gel strip. Above this groove, rib-like or tapered sidewalls 402 are provided to receive compartment frames in a manner as to contact the gel strip below. The compartment frames may be fastened by press-fit between two adjacent ribs 402.

At a first end portion of the insert element 200, an essentially vertical border wall 403 is provided which may abut to an end portion of compartment frames or gel strips inserted above or in the gel strip receptions 401. Close to the wall 403, a grip 404 is provided to allow a user to hold and operate the insert element 200 in a convenient manner. At a second end portion of the insert element 200, individual vertical wall elements 405 are provided opposing the vertical wall 403 so that inserting the compartment frames can be mechanically supported by means of the vertical border elements 405 which may receive a compartment frame in a snap-fit manner.

The insert element 200 may be integrally formed and may be manufactured, for instance, as an injection molded element. According to the described embodiment, the insert element 200 may be made of a plastics material.

The insert element 200 has a thin-walled bottom, that is to say a thin-wall base within the grooves forming the gel strip receptions 401. Optionally, a material for supporting or promoting a thermal contact between the heating/cooling elements provided in the platforms 103, 105 on the one hand and gel strips inserted in the gel strip receptions 401 on the other hand may be provided at the base within the grooves forming the gel strip receptions 401. For example, a metallic material, mineral fibers or a ceramics may be embedded in this bottom, or the bottom may be manufactured of one of these materials.

**Fig. 5** shows the insert element 200 in an operation state in which a plurality of gel strips 500 have been inserted in some of the gel strip receptions 401. However, some of the gel strip receptions 401 may remain free of gel strips 500.

As can further be seen, each of the gel strips 500 comprises a first contact 501 at a first end portion thereof, and comprises a second contact 502 at a second end portion of the corresponding gel strip 500. These contacts 501, 502 may be contacted by electrode members 201, 203, respectively, in order to apply an electric field along the extension of the respective gel strip 500. A central (major) part of the gel strips 500 between the contacts 501, 502 is formed by gel material, wherein a pH gradient may be generated along the extension direction of the gel strip 500 in order to allow a separation of components of an analyt by means of isoelectric focussing. Furthermore, before using the gel strips, the gel strips may be hydrated, after being inserted in the gel strip receptions 401 or before being inserted in the gel strip receptions 401, for instance in a biolab. The gel material may be provided on a strip-like plastics substrate of the gel strip 500.

As can be seen in Fig. 5, gel strips 500 of different lengths may be inserted in the gel strip receptions 401 in accordance with the modular character of the electrophoresis system according to an embodiment of the invention.

When an analyt is inserted in the gel strips 500, for instance by injecting the analyt by means of a pipette or the like, different fractions of molecules (for instance proteins) of the analyt having different charge properties are moved with different velocities along the gel strips 500 until they are stopped at a particular position of the gel strip 500, which is defined by the local pH gradient at this position and the charge of the corresponding molecules. Thus, different substances may be separated to form individual bands along the extension of the gel strips 500.

Thus, Fig. 5 shows a configuration of the insert element 200 for a so-called "in-gel electrophoresis experiment", that is to say a gel electrophoresis experiment in which different fractions of substances of an analyt inserted in the gel strip 500 are separated so that different bands of fractions are stopped at different positions within the gel strips 500. For recovering the separated components, the corresponding gel strip 500 may be cut, or the respective fractions may be dissolved from the gel strip 500, for instance by means of a pipette.

In the following, referring to **Fig. 6**, an alternative operation state or configuration state of the insert element 200 will be described so that the insert element 200 in the configuration of Fig. 6 can be used for so-called "off-gel electrophoresis" in accordance with the general concept disclosed, for instance, in WO 01/86279 A1 and WO 03/019172 A2.

In the configuration shown in Fig. 6, a plurality of compartment frames 600 are inserted in some of the receptions defined as portions between adjacent ribs 402. Before inserting the compartment frames 600 into the corresponding grooves, the grooves are equipped with gel strips (not shown in Fig. 6) inserted in the corresponding gel strip receptions 401.

The compartment frames 601 may then be positioned above the gel strips 500. Each of the compartment frames 600 comprises a plurality of cavities 601 each of which may be filled individually with analyt, buffer, electrolyte, or any other solution. The cavities 601 may be arranged in a one-dimensional manner, that is to say in a row-like manner. The cavities 601 may be filled, for instance, by means of a pipette. Within a cavity 601, there may be a direct functional connection between fluid inserted in the cavity 601 and the adjacent gel part of the gel strip 500 below the respective cavity 601. Thus, the compartment frames 600 are adapted for providing an analyt filled compartment fluid coupled to the gel strip 500.

In the following, a principle of an "off-gel electrophoresis" experiment will be described which may be performed with the configuration of Fig. 6.

For this purpose, gel strips 500 may be used.

First, a gel strip 500 is hydrated and is inserted in one of the gel strip receptions 401. Then, a corresponding compartment frame 600 is positioned above the respective gel strip 500 received in the gel strip reception 401 and abuts laterally against sidewalls of the ribs 402. One or both end portions of the compartment frames 600 may also be fixed by means of the vertical wall elements 403, 405. At an open bottom part of the compartment frame 600, it abuts against an upper side of the gel strip 500 so as to enable fluid communication between the gel and fluid contained in the cavities 601 of the compartment frame 600.

Electrode members 201, 203 may be electrically connected to contacts 501, 502 of the gel strip 500. Alternatively, electrical contacts of the electrode members 201, 203 may be directly "dipped" in cavities 601 of the compartment frames 600 so as to apply an electric field along an extension of the gel strip 500.

An analyt may be filled in one or more of the cavities 601, for instance in one of the cavities located at one of the end portions of the compartment frames 600. The analyt may then flow (for instance promoted by effects like diffusion) into the gel strip 500 below the respective cavity 601. As a consequence of an applied electric field, charged substances of the analyt may then be moved along an extension of the gel strip 500. Due to the isoelectric focusing occurring in accordance with the pH gradient provided along the gel strip 500, each fraction of substances stops at a particular position of the gel strip 500. The fraction or component may then flow (for instance promoted by effects like diffusion) from the particular position within the gel strip 500 back to the respective cavity 601 above this position. This cavity 601 may be filled with a buffer solution, so that the corresponding fraction is accumulated in a particular one of the cavities 601 and can be recovered by receiving the substance comprising buffer in the cavity 601, for instance by means of a pipette.

Coming back to Fig. 1, the gel electrophoresis device 100 having the insert element receptions 101, 102 is adapted so that the insert element 200 may be inserted in a corresponding one of the insert element receptions. Then, also with assistance of the electrical contacts 107, 108, which may be brought in contact with electrical contacts of the electrode members 201, 203, an electric field may be applied along an extension of the gel strips 500 by means of an applied electric field due to the electrical contacting of the gel strips 500.

Referring to **Fig. 7**, the insert element 200 will be described in a configuration which differs from the configuration of the insert element 200 shown in Fig. 6 in that all gel strip receptions 401 have received a particular one of the compartment frames 600.

Thus, in the configuration of Fig. 7, in each measurement channel 401, an off-gel electrophoresis analysis may be performed. In contrast to this, according to Fig. 6, the measurement channels 401 filled with compartment frames 601 are adapted to perform an off-gel electrophoresis analysis. The remaining measurement channels 401 in which only a gel strip 500, but not a compartment frame 600 is inserted, are adapted to perform an in-gel electrophoresis experiment. Thus, the modular system according to embodiments of the invention may be capable to be flexibly adjusted for a configuration desired by a user, so that the user may perform and combine in-gel and off-gel experiments according to her or his preferences.

In other words, the gel electrophoresis device 100 is adapted to selectively perform a separation of an analyt within the gel strips 500 and/or to perform a separation of an analyt so that the separation products are provided in a solution contained in different cavities 601 of compartment frames 600.

As can be seen in the configuration of Fig. 7, the first electrode member 201 is attached to the insert element 200 to be received in an insert element reception 101 or 102, wherein the first electrode member 201 has electrically contacts which are not shown in Fig. 7 to contact the gel strips 500 received in the gel strip receptions 401.

The second electrode member 203 is attached to the insert element 200 to be received in an insert element 101, 102 to contact the gel strip 500 received in the gel strip reception 401.

Alternatively, it is possible that the first electrode member 201 is attached to the insert element 200 to be received in one of the insert element receptions 101,102, and that the electrode member 201 directly dips into one of the cavities 601 of the compartment frames 600. According to this configuration, also the second electrode member 203 attached to the insert element 200 to be received in one of the insert element receptions 101, 102 may be directly dipped in a cavity 601 of a compartment frame 600.

According to the embodiment of Fig. 7, the electrode members 201, 203 are clicked onto the top of the insert element 200 loaded with gel strips 500 and compartment frames 600. Thus, the attachment of the electrodes 201, 203 is releasably. Consequently, after use, the compartment frames 600 and/or the gel strips 500 may be removed for cleaning and/or may be substituted by others, and then the electrodes 201, 203 may be clicked again on the insert element 200.

Particularly, the removable attachment of the first electrode member 201 and of the second electrode member 203 to the insert element 200 or to the gel electrophoresis device 100 may be performed by means of a magnetic attachment element. Although this will be described below in more detail, Fig. 7 shows that a permanent magnet 700 is attached at a lateral end portion of a housing 701 of the first electrode member 201.

Referring again to Fig. 2, when the insert element 200 is inserted in the insert element reception 101, the permanent magnet 700 is located close or adjacent to the rail 106. When a ferromagnetic strip is provided at a bottom part of the rail 106, an attracting magnetic force between the permanent magnet 700 and this ferromagnetic strip may be effected so that a secure magnetic locking of the electrode member 201 to the gel electrophoresis device 100 can be realized by means of the magnetic locking element 700 and the corresponding magnet counterpart within the rail 106. In a similar manner, a permanent magnet can also be provided at a lateral part of the housing 701 of the first electrode member 201 adjacent to the electrical contact 300.

As will be described below in more detail, the first electrode member 201 is adapted to concurrently electrically contact each of the gel strips 401 in common. In other words, a common electrical contact between the electrode member 201 and all gel strips below the compartment frames 600 may be effected, wherein this contact can be provided by means of the electrical contact 300 which may be brought in contact to the first electrical contact 107 of the rail 104. Thus, when the first electrode member 201 is slid or shifted along an extension of the gel strips 401, as shown in Fig. 8, a sliding contact is provided between the contact 300 and the strip-like contact 107.

The second electrode member 203 may or may not be adapted to electrically contact each of the gel strips 401 individually. As indicated in Fig. 7, an individual contact to each of the gel strips 401 can be realized by means of individual contact spring elements 702. In other words, the second electrode 203 may be adapted to electrically contact the gel strips 401 individually.

**Fig. 8** additionally shows contacts 801 of the first electrode member 201 which contact the various gel strips 500 received in the gel strip receptions 401. However, the contacts 801 are electrically connected to be brought to the same electrical potential, via a connection with the common contact 300.

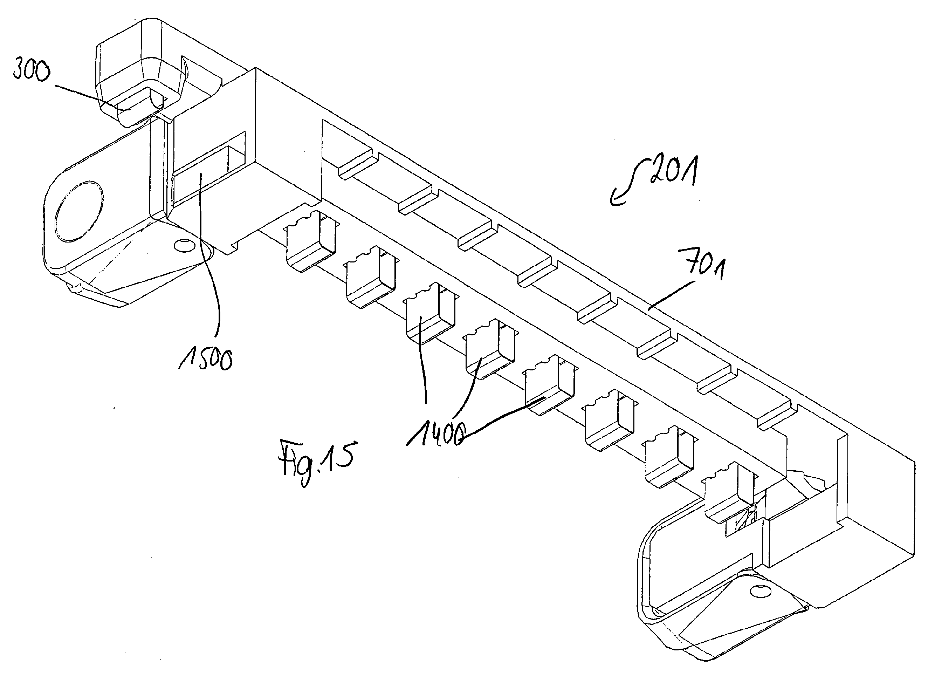

**Fig. 9** shows a partially sectional view of the insert element 200 illustrating the geometrical configuration of the different components.

In the following, referring to **Fig. 10**, details of the electrode arrangement in the insert element 200 will be described in the context of a more detailed description of the second electrode member 203.

The second electrode member 203 is adapted to provide an electrical contact with a plurality of gel strips 500 located in the gel strip receptions 401 individually so that each electrical signal of the gel strips 500 is controllable and/or monitorable separately.

As can be seen in Fig. 10, the second electrode member 203 comprises a second housing 1000 in which the individual electrical contact springs 702 are arranged and are electrically decoupled from one another. Each of the contacts 702 may be connected separately to a circuitry (not shown) in the interior of the gel electrophoresis device 100 for providing control signals and for processing measurement signals detected by the individual contacts 702.

Such a circuit may be provided as an integrated circuit (IC) which may be manufactured in silicon technology or may be conventionally wired. Such a circuit may be mounted on a printed circuit board (PCB).

Although not shown in Fig. 10, the second electrode member 203 may be adapted to provide an electrical contact with at least three gel strips 500 received in gel strip receptions 401, wherein at least two of the at least three gel strips 500 may be combined to a group of gel strips 500. The second electrode member 203 may then be further adapted to provide an electrical contact concurrently with the gel strips 500 combined to a group so that the electrical signals of the gel strips 500 combined to a group are controllable and/or monitorable in common.

In other words, the individual contact functionality of the second electrode member 203 can be further refined in a manner to allow a separate contact of different gel strips 500, however, further allowing to couple different of the contact springs 702 to a group and to control or read out the gel strips 500 within this group in common but separate from gel strips 500 which are not included in this group. It is also possible to provide a switch unit (not shown) within the gel electrophoresis device 100 which flexibly switches or interconnects a plurality of the contacts 702 together, in order to realize a measurement environment in accordance with a user definition.

In the embodiments shown in Fig. 1 to Fig. 10, an electrical control circuit (not shown) can be provided in the gel electrophoresis device 100 and may be coupled to the second electrode member 203 for applying an electrical signal to the gel strips 500 received in the gel strip receptions 401 separately from other gel strips 500 received in other gel strip receptions 401 of the insert element 200.

Furthermore, an electrical monitoring circuit (not shown) may be provided in the gel electrophoresis device 100 and may be coupled to the second electrode member 203 for monitoring an electrical signal of the gel strips 500 received in the gel strip receptions 401 separately from the remaining gel strips 500 received in other gel strip receptions 401.

By means of the electrical monitoring circuit, an operation state of the gel electrophoresis device 100 may be monitored, or an operation state of the gel electrophoresis device 100 may be controlled or regulated based on electrical signals monitored by the electrical monitoring circuit.

For instance, this may include detecting a dehydration (that is to say a loss of humidity) of at least one of the gel strips 500 received in the gel strip receptions 401, rehydrating (that is to say to deliver fluid to) at least one of the gel strips 500 received in one of the gel strip receptions 401, detecting a short circuit in the gel strips 500 received in the gel strip receptions 401 (for instance by detecting that an electric current in the gel strip 500 has exceeded a threshold value), detecting a number of gel strips 500 received in the gel strip receptions 401 being present in the gel electrophoresis device 100 (for instance by detecting the number of gel strips 500 in which an electric current is flowing), detecting at least one measurement parameter (for instance an electrical current, an electrical voltage or an electrical field as a basis for regulating the experimental conditions), diagnosing an error in the gel electrophoresis device 100 (for instance by detecting that an electric current in the gel strip 500 has fallen below a threshold value), adjusting at least one buffer concentration in the gel electrophoresis device (for instance in case that it is detected that the current flowing through one of the gel strips 500 is too high as a consequence of a too high salt concentration in a buffer), or terminating a measurement in the gel strips 500 of the gel electrophoresis device 100 (for instance based on a current or voltage pattern of one of the gel strips 500 which indicates that the electrophoresis process in the gel strip is already finished).

In the following, referring to **Fig. 11**, a detailed view and a cross section through a part of the insert element 200 is explained.

Fig. 11 shows in more detail the geometric configuration of the gel strip receptions 401 and of the ribs 402. A bottom portion of each of the gel strip receptions 401 comprises a thin-walled bottom plate 1100. Adjacent to the horizontal bottom plate 1100, essentially vertical wall portions 1101 are provided which define, together with the bottom plate 1100, a portion for receiving the gel strips 500. Above the vertical wall portions 1101, an outwardly tapered slant wall part 1102 is provided which supports the reception of the compartment frame 600.

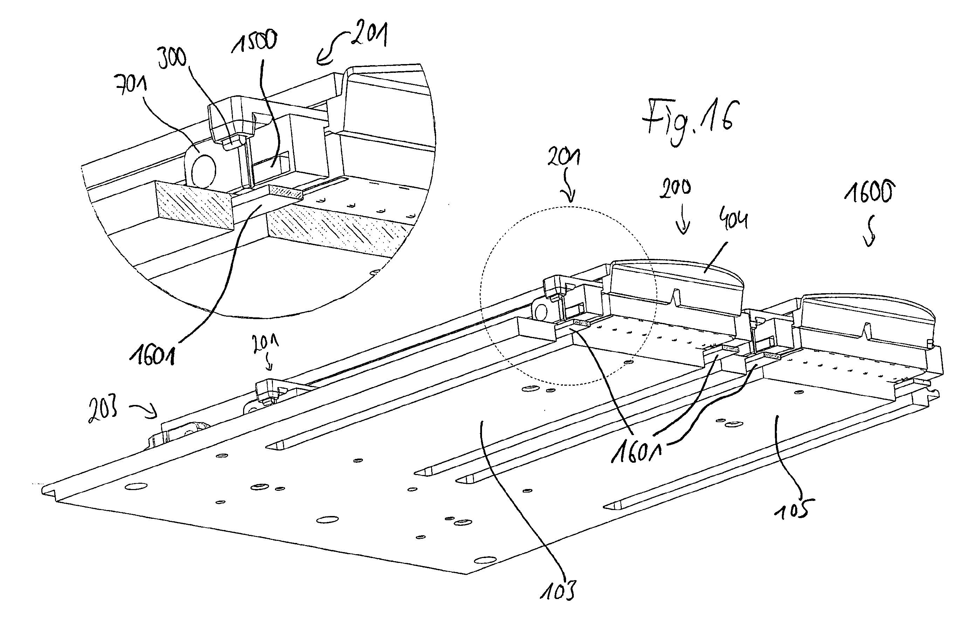

**Fig. 12** shows again a detailed view of the second electrode 203 detached from the insert element 200 which is shown from a bottom side in Fig. 12.

As can be seen in Fig. 12, springs 1201 are provided in lateral portions of the essentially U-shaped second electrode member 203 to be engaged and fastened to lateral portions of the carrier element 400, that is to say to its side walls.

Further, hook-like elements 1200 are provided at a bottom portion of the second electrode member 203 to be engaged by correspondingly shaped fastening elements 1202 provided at a bottom part of the insert element 200.

**Fig. 13** shows a detailed view of a compartment frame 600 comprising the plurality of cavity 601.

As can be seen on the right hand side of Fig. 13, the cavities 601 are open at a bottom side to allow a direct fluid contact between a gel strip 500 provided below the compartment frame 600 and fluid filled in one of the cavities 601. Furthermore, the side walls of the cavity 601 are tapered inwardly, so as to be engageable with the correspondingly shaped gel strip receptions 401 of the insert element 200, as can be seen in Fig. 11.

In the following, referring to **Fig. 14**, the configuration of the first electrode member 201 will be described in more detail.

As already mentioned above, the first electrode member 201 is provided in a housing 701 and has, at a lateral position thereof, a permanent magnet 700 as a magnet locking element for locking the first electrode member 201 to a ferromagnetic stripe provided at a bottom part of one of the rails 104, 106 of the gel electrophoresis device 100.

At a lateral portion of the housing 701, an electrical contact 301 is provided which may be connected to the electrical contact 107 on the rail 104 or to the electrical contact 108 on the rail 106. The first electrode 201 can be clicked on the insert element 200 or tray which can be supported by means of a fastening spring-fit 1401 which may be provided at one or both lateral portions of the first electrode member 201.

When, in this configuration, the first electrode member 201 attached to the insert element 200 is attached to the gel electrophoresis device 100, a magnetic locking between the magnetic element 700 and the ferromagnetic strip can be induced.

As can further be taken from Fig. 14, the first electrode member 201 is adapted to provide an electrical contact with all gel strips 500 concurrently so that the electrical signals of the gel strips 500 are controllable and/or monitorable in common. For this purpose, contacts 1400 are provided at a bottom side of the first electrode member 201 which contacts 1400 are electrically connected with each other and with the contact 300 to be contactable to the strip-like contact 107 or 108 of the rail 104 or of the rail 106. For instance, the contacts 1400, 300, 107 may supply a high voltage signal to the gel strips 500 received in the gel strip receptions 401.

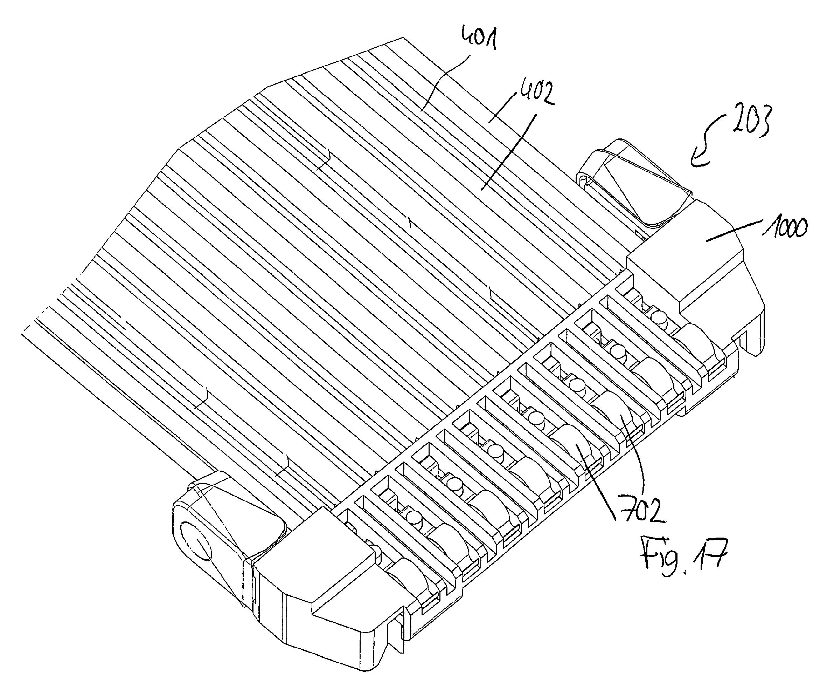

**Fig. 15** shows a view of the first electrode member 201 so that the common electrical contact 300 can be seen in more detail. Further, it can be seen in Fig. 15 that a lateral position of the first electrode member 201 has attached thereto a permanent magnet 1500 as a magnetic locking element to generate a magnetic locking force together with a ferromagnetic strip provided in the inside of the rail 104 in an operation state in which the first electrode member 201 is attached to the gel electrophoresis device 100.

In the following, referring to **Fig. 16**, a bottom view of a portion of the gel electrophoresis device 100 and of a part of the insert element 200 will be described.

Fig. 16 shows the bottom views of the first platform 103 and of the second platform 105. On the top of the first platform 103, the insert element 200 is inserted. On the top of the platform 105 and thus in the second insert element reception 102, a further insert element 1600 is inserted.

In Fig. 16, the rails 104, 106 are not shown. However, it is shown that at a bottom part of the rails 104, 106, ferromagnetic strips 1601 are provided which extend along an extension direction of the gel strips 500 and which serve as a magnetic counterpart to the permanent magnet 1500 provided at a lateral portion of the first electrode 201 to allow to magnetically lock the electrode 201 to the gel electrophoresis device 100.

In other words, the permanent magnet 1500 and the ferromagnetic strips 1601 form a magnetic locking system comprising the magnetic locking element 1500 connected to the first electrode member 201 to contact the gel strips 500 received in gel strip receptions 401 of the insert element 200, 1600. The ferromagnetic strip 1601 serves as a magnetic counterpart connected to the gel electrophoresis device 100. Thus, the magnetic locking element 1500 is adapted to lock the first electrode member 201 to the gel electrophoresis device 100 by means of the magnetic counterpart 1601.

In other words, the configuration of Fig. 16 illustrates an electrode arrangement for a gel electrophoresis device 100, wherein the first electrode member 201 of the electrode arrangement provides an electrical contact, via the contact 300, with a plurality of gel strips 500. The first electrode member 201 comprises the permanent magnet 1500 as a first locking element to lock the first electrode member 201 to the gel electrophoresis device 100.

The first locking element 1500 is realized as a magnetic locking element, but may alternatively be realized as one of an electric locking element (for instance a ferroelectric material or an electrically conductive material to which an electrical voltage is applied), a vacuum locking element, a mechanical locking element, a snapin locking element, and a hook and loop fastening locking element. The permanent magnet 1500 locks the first electrode member 201 to the temperature-controllable carrier element 103 of the gel electrophoresis device. It is recalled that the platform 103 may be provided with cooling and/or heating elements, like a heating coil or a Peltier cooling device.

As can be seen in Fig. 16, the permanent magnet 1500 and, see Fig. 7, also the permanent magnet 700, are arranged at lateral portions of the housing 701 of the first electrode member 201. Furthermore, the first electrode member 201 comprises the electrical contact 300 for supplying an electric signal to the first electrode member 201, wherein the electric contact 300 is also provided at a lateral position of the first housing 701.

As can be seen in Fig. 16, the magnetic field generating strip 1601 is provided essentially parallel to the gel strip 500 so that the first electrode member 201 is shiftable along the magnetic field generating strip 1601.

**Fig. 17** shows another view of a second electrode member 203.

It should be noted that the term "comprising" does not exclude other elements or steps and the "a" or "an" does not exclude a plurality. Also elements described in association with different embodiments may be combined. It should also be noted that reference signs in the claims shall not be construed as limiting the scope of the claims.

## Claims

1. An insert element (200) for a gel electrophoresis device (100), the insert element (200) comprising
a carrier element (400) comprising gel strip receptions (401), wherein each of the gel strip receptions (401) is adapted to removably receive a gel strip (500),
**characterized by**:
one or more compartment frames (600),
a plurality of ribs (402) between adjacent gel strip receptions (401), adapted to fasten a respective one of the one or more compartment frames (600) between two adjacent ribs (402),
wherein each gel strip reception (401) is adapted to receive one of the one or more compartment frames (600) to be located close to the gel strip (500), the compartment frame (600) being adapted for providing at least one analyt filled cavity (601) which is fluid-coupled to the gel strip (500).

2. The insert element (200) of the preceding claim, wherein at least one of the gel strip receptions (401) is one of the group consisting of a groove, a V-shaped groove, a U-shaped groove, a recess, a cavity, and an indentation.

3. The insert element (200) of claim 1 or 2, wherein the one or more ribs (402) between adjacent gel strip receptions (401) are adapted to fasten the compartment frames by press-fit or snap-fit.

4. A gel electrophoresis device (100), comprising
an insert element (200) of claim 1 or any one of the above claims,
an insert element reception (101, 102) adapted to receive the insert element (200),
a gel strip (500) removably received in a gel strip reception (401) of the insert element (200).

5. The gel electrophoresis device (100) of the preceding claim, wherein
the gel electrophoresis device (100) is adapted for fluid separation by means of an applied electric field.

6. The gel electrophoresis device (100) of the preceding claim, wherein
the gel electrophoresis device (100) is adapted to selectively perform a separation of an analyt within the gel strips (500) and/or to perform a separation of an analyt so that the separation products are provided in a solution contained in the compartment frames (600).

7. The gel electrophoresis device (100) of any one of the claim 4-6, comprising
a first electrode member (201) adapted to be attachable to an insert element (200) received in one of the one or more insert element receptions (101, 102) to contact a gel strip (500) received in a gel strip reception (401);
a second electrode member (203) adapted to be attachable to the insert element (200) received in the one of the one or more insert element receptions (101, 102) to contact the gel strip (500) received in the gel strip reception (401).

8. A method of operating a gel electrophoresis device (100), the method comprising
receiving a gel strip (500) in a gel strip reception (401) of a carrier element (400),
fasten a compartment frame (600) to the carrier element (400) to be located close and fluid-coupled to the gel strip (500),
filling at least one cavity (601) of the compartment frame (600) with an analyt, and
performing a separation of an analyt by applying an electric field, so that the separation products are provided in a solution contained in the compartment frame (600).

## Patentansprüche

1. Einsatzelement (200) für ein Gelelektrophoresegerät (100), wobei das Einsatzelement (200) Folgendes aufweist:
ein Trägerelement (400), das Gelstreifenaufnahmen (401) aufweist, wobei jede der Gelstreifenaufnahmen (401) zum Aufnehmen eines Gelstreifens (500) und dessen Entfernen daraus eingerichtet ist,
**gekennzeichnet durch**:
einen oder mehrere Trennrahmen (600)
eine Vielzahl von Stegen (402) zwischen benachbarten Gelstreifenaufnahmen (401), die zum Befestigen jeweils eines oder mehrerer der Trennrahmen (600) zwischen zwei benachbarten Stegen (402) eingerichtet sind,
wobei jede Gelstreifenaufnahme (401) zum Aufnehmen eines oder mehrerer der Trennrahmen (600) eingerichtet ist, damit dieser dicht am Gelstreifen (500) platziert wird, wobei der Trennrahmen (600) so eingerichtet ist, dass er mindestens eine mit einem Analyten gefüllte Kavität bereitstellt, die über eine Flüssigkeit mit dem Gelstreifen (500) verbunden ist.

2. Einsatzelement (200) nach dem vorhergehenden Anspruch, bei dem mindestens eine der Gelstreifenaufnahmen (401) zu der Gruppe gehört, die aus einer Rille, einer V-förmigen Rille, einer U-förmigen Rille, einer Aussparung, einer Kavität und einer Vertiefung besteht.

3. Einsatzelement (200) nach Anspruch 1 oder 2, bei dem der eine oder die mehreren Stege (402) zwischen benachbarten Gelstreifenaufnahmen (401) so eingerichtet sind, dass sie die Trennrahmen durch Presspassung oder durch Einrasten befestigen.

4. Gelelektrophoresegerät (100), das Folgendes aufweist:
ein Einsatzelement (200) nach Anspruch 1 oder einem der vorhergehenden Ansprüche,
eine Einsatzelementaufnahme (101, 102), die zum Aufnehmen des Einsatzelements (200) eingerichtet ist,
einen Gelstreifen (500), der in einer Gelstreifenaufnahme (401) des Einsatzelements (200) aufgenommen und daraus auch wieder entfernt werden kann.

5. Gelelektrophoresegerät (100) nach dem vorhergehenden Anspruch, wobei
das Gelelektrophoresegerät (100) zur Fluidtrennung unter Verwendung eines angelegten elektrischen Feldes eingerichtet ist.

6. Gelelektrophoresegerät (100) nach dem vorhergehenden Anspruch, wobei
das Gelelektrophoresegerät (100) so eingerichtet ist, dass es eine Trennung eines Analyten innerhalb der Gelstreifen (500) selektiv durchführt und/oder eine Trennung eines Analyten so durchführt, dass die Trennprodukte in einer in den Trennrahmen (600) enthaltenen Lösung bereitgestellt werden.

7. Gelelektrophoresegerät (100) nach einem der Ansprüche 4 bis 6, das Folgendes aufweist:
ein erstes Elektrodenelement (201), das an einem in einer oder mehreren der Einsatzelementaufnahmen (101, 102) aufgenommenen Einsatzelement (200) angebracht werden kann, um einen Kontakt mit einem in einer Gelstreifenaufnahme (401) aufgenommenen Geistreifen (500) herzustellen;
ein zweites Elektrodenelement (203), das an dem in der einen oder den mehreren der Einsatzelementaufnahmen (101, 102) aufgenommenen Einsatzelement (200) angebracht werden kann, um einen Kontakt mit dem in
der Gelstreifenaufnahme (401) aufgenommenen Gelstreifen (500) herzustellen.

8. Verfahren zum Betreiben eines Gelelektrophoresegerätes (100), wobei das Verfahren folgende Schritte aufweist:
Aufnehmen eines Gelstreifens (500) in einer Geistreifenaufnahme (401) eines Trägerelements (400),
Befestigen eines Trennrahmens (600) am Trägerelement (400), damit er dicht am Geistreifen (500) platziert und über eine Flüssigkeit mit ihm verbunden ist,
Füllen mindestens einer Kavität (601) des Trennrahmens (600) mit einem Analyten, und
Durchführen einer Trennung eines Analyten durch Anlegen eines elektrischen Feldes, sodass die Trennprodukte in einer im Trennrahmen (600) enthaltenen Lösung bereitgestellt werden.

## Revendications

1. Elément formant insert (200) destiné à un dispositif d'électrophorèse sur gel (100), l'élément formant insert (200) comprenant :
un élément de support (400) comprenant des réceptacles de bande de gel (401), dans lequel chacun des réceptacles de bande de gel (401) est à même de recevoir de manière amovible une bande de gel (500) ;
**caractérisé par** :
un ou plusieurs compartiments (600) ;
une pluralité de nervures (402) entre des réceptacles de bande de gel (401) adjacents, à même de fixer un compartiment respectif parmi le ou les compartiments (600) entre deux nervures (402) adjacentes ;
dans lequel chaque réceptacle de bande de gel (401) est à même de recevoir un compartiment parmi le ou les compartiments (600) près de la bande de gel (500), le compartiment (600) étant à même de fournir au moins une cavité remplie d'une analyte (601) qui est reliée par accouplement hydraulique à la bande de gel (500).

2. Elément formant insert (200) suivant la revendication précédente, dans lequel au moins un des réceptacles de bande de gel (401) fait partie du groupe comprenant une gorge, une gorge en forme de V, une gorge en forme de U, un évidement, une cavité et une échancrure.

3. Elément formant insert (200) suivant la revendication 1 ou 2, dans lequel la ou les nervures (402) entre des réceptacles de bande de gel (401) adjacents est ou sont à même de fixer les compartiments par emmanchement à force ou par emboîtement pression.

4. Dispositif d'électrophorèse sur gel (100), comprenant :
un élément formant insert (200) suivant la revendication 1 ou suivant l'une quelconque des revendications précédentes ;
un réceptacle d'élément formant insert (101, 102) à même de recevoir l'élément formant insert (200) ;
une bande de gel (500) reçue de manière amovible dans un réceptacle de bande de gel (401) de l'élément formant insert (200).

5. Dispositif d'électrophorèse sur gel (100) suivant la revendication précédente, dans lequel
le dispositif d'électrophorèse sur gel (100) se prête à une séparation de fluide au moyen d'un champ électrique appliqué.

6. Dispositif d'électrophorèse sur gel (100) suivant la revendication précédente, dans lequel
le dispositif d'électrophorèse sur gel (100) est à même d'exécuter de manière sélective une séparation d'une analyte à l'intérieur des bandes de gel (500) et/ou d'exécuter une séparation d'une analyte de sorte que les produits de la séparation sont fournis dans une solution contenue dans les compartiments (600).

7. Dispositif d'électrophorèse sur gel (100) suivant l'une quelconque des revendications 4 à 6, comprenant :
un premier élément d'électrode (201) à même d'être fixé à un élément formant insert (200) reçu dans un réceptacle parmi le ou les réceptacles d'élément formant insert (101, 102) pour venir en contact avec une bande de gel (500) reçue dans un réceptacle de bande de gel (401) ;
un deuxième élément d'électrode (203) à même d'être fixé à l'élément formant insert (200) reçu dans le réceptacle parmi le ou les réceptacles d'élément formant insert (101, 102) pour venir en contact avec la bande de gel (500) reçue dans le réceptacle de bande de gel (401).

8. Procédé permettant de faire fonctionner un dispositif d'électrophorèse sur gel (100), le procédé comprenant les étapes suivantes :
la réception d'une bande de gel (500) dans un réceptacle de bande de gel (401) d'un élément de support (400) ;
la fixation d'un compartiment (600) à l'élément de support (400) près de la bande de gel (500) et relié par accouplement hydraulique à celle-ci ;
le remplissage d'une cavité (601) au moins du compartiment (600) avec une analyte, et
l'exécution d'une séparation d'une analyte en appliquant un champ électrique, de sorte que les produits de la séparation sont fournis dans une solution contenue dans le compartiment (600).
